(19) Europäisches Patentamt
European Patent Office
Office européen des brevets

(11) EP 1 780 562 A1

(12) **EUROPEAN PATENT APPLICATION**
published in accordance with Art. 158(3) EPC

(43) Date of publication:
**02.05.2007 Bulletin 2007/18**

(21) Application number: **05780506.1**

(22) Date of filing: **17.08.2005**

(51) Int Cl.:
***G02B 5/30*** *(2006.01)* ***G02F 1/1335*** *(2006.01)*
***G02F 1/13363*** *(2006.01)*

(86) International application number:
**PCT/JP2005/015000**

(87) International publication number:
**WO 2006/019112 (23.02.2006 Gazette 2006/08)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.08.2004 JP 2004239522**

(71) Applicant: **JSR Corporation**
**Tokyo 104-0045 (JP)**

(72) Inventors:
- **SEKIGUCHI, Masayuki,**
**c/o JSR CORPORATION**
**Tokyo 1040045 (JP)**
- **USHINO, Takuhiro,**
**c/o JSR CORPORATION**
**Tokyo 1040045 (JP)**
- **KAWASHIMA, Naoyuki,**
**c/o JSR CORPORATION**
**Tokyo 1040045 (JP)**

(74) Representative: **Leson, Thomas Johannes Alois**
**Patentanwälte**
**Tiedtke-Bühling-Kinne & Partner,**
**Bavariaring 4**
**80336 München (DE)**

# (54) OPTICAL FILM, POLARIZING PLATE AND LIQUID CRYSTAL DISPLAY

(57) [Problems]

To provide an optical film for a liquid crystal display that has good viewing angle compensation effects such as preventing color dropout (coloration) and achieving high contrast in all directions when used in a liquid crystal display.

[Means for solving problems]

An optical film of the invention comprises at least one film (a) layer made of a cyclic olefin resin exhibiting positive birefringence and a film (b) layer made of a polymer exhibiting negative birefringence laminated on said film (a) layer, and satisfies (1) $0.1 \leq$ Nz-coefficient $\leq 0.9$, (2) $0.5 \leq R450/R550 \leq 0.9$, (3) $1.0 \leq R650/R550 \leq 1.3$ and (4) 200 nm $\leq R550 \leq$ 350 nm; wherein R450, R550 and R650 represent the retardation R at wavelengths of 450 nm, 550 nm and 650 nm, respectively.

EP 1 780 562 A1

## Description

### Technical Field

The present invention relates to an optical film, a polarizer and a liquid crystal display. More specifically, it relates to an optical film for liquid crystal displays comprising a cyclic olefin resin film, a polarizer comprising said optical film, and a liquid crystal display comprising the optical film or the polarizer.

### Background Art

A liquid crystal display has advantages such as very thin and compact features and low power consumption, and hence it is widely used in various products such as cellular phones, notebook personal computers, car navigation systems, and liquid crystal television sets (TV) . Among them, a liquid crystal TV with a transmissive liquid crystal display (particularly, vertically aligned (VA) mode) is anticipated to have larger demand in future, and along with enlargement of display size, there is a demand more than ever for high display performances, such as a wide viewing angle and high brightness, and cost reduction.

In the case of a transmissive liquid crystal display in which a pair of polarizers are used in the cross-Nicol state (state where the transmission axes of polarizers are perpendicular to each other), when a viewing position at the display is shifted from the front of the display to a position in an oblique direction, the angle between the transmission axes of two polarizers apparently deviates from 90 degrees, causing problems such as light leakage at black display and color dropout (coloration). In order to solve these problems, various retardation films are placed between a liquid crystal cell and each polarizer to compensate the viewing angle dependence of the polarizer.

As such retardation films, for example, optical films containing thermoplastic norbornene resins are known (See, for example, Patent Documents 1 to 3). Such optical films composed of norbornene resins have excellent optical properties such as high transparency, small retardation of transmitted light, and ability of providing a uniform and stable retardation to transmitted light.

In liquid crystal TV and others, there are required high performances (viewing angle compensation effects) including the followings: the retardation should not depend on viewing angle so as to attain high contrast ratio in all directions; the identical retardation effects should be provided in any of R (red), G (green) and B (blue) regions, that is, in the wavelength region of about 400 to about 700 nm, so as to prevent color dropout (coloration); and others. With the conventional retardation films described above, however, such high requirements were difficult to be satisfied well.

Patent Document 1: Japanese Patent Laid-open Publication No. H5-2108

Patent Document 2: Japanese Patent Laid-open Publication No. H7-287122

Patent Document 3: Japanese Patent Laid-open Publication No. H7-287123

### Disclosure of the Invention

<Problems to be Solved by the Invention>

An object of the present invention is to provide an optical film with which the retardation of transmitted light and its wavelength dependence can be controlled, the optical film having good viewing angle compensation effects such as prevention of color dropout (coloration) and high contrast ratio in all directions when used in a liquid crystal display; a polarizer comprising said optical film; and a liquid crystal display comprising said optical film or said polarizer.

<Means for Solving the Problems>

The present inventors have earnestly studied to solve the above problems. Thereby, they have discovered that the above problems can be solved with an optical film wherein a film layer made of a polymer exhibiting specific negative birefringent properties is formed on a cyclic olefin resin film exhibiting specific positive birefringent properties, the optical film having specific optical properties, and they have completed the present invention.

That is, the optical film of the present invention comprises at least one film (a) layer made of a cyclic olefin resin exhibiting positive birefringence and a film (b) layer, which has a thickness of 100 nm to 200, 000 nm, made of a polymer exhibiting negative birefringence on said film (a) layer; and satisfies formulae (1) to (4) below:

$$(1)\quad 0.1 \leq \text{Nz-coefficient} \leq 0.9,$$

$$(2)\quad 0.5 \leq R450/R550 \leq 0.9,$$

$$(3)\quad 1.0 \leq R650/R550 \leq 1.3,$$

and

$$(4)\quad 200\ nm \leq R550 \leq 350\ nm.$$

In formulae (1) to (4), Nz-coefficient is given by Nz-coefficient = (nx - nz)/(nx - ny), R450, R550 and R650 represent the retardation, R, at wavelengths of 450 nm, 550 nm and 650 nm, respectively, and R is given by R = (nx - ny) x d. Here, nx represents the maximum value of refractive index in directions on the film plane, ny represents the refractive index in the direction perpendicular to the axis for nx in the film plane, nz is the refractive index in the direction of film thickness perpendicular to the axes for nx and ny, and d represents the film thickness in nm.

Preferably, film (a) has a thickness of 10,000 nm to 300,000 nm and satisfies formulae (5) and (6) below:

$$(5)\quad 1.0 \leq R_a450/R_a550 \leq 1.3,$$

and

$$(6)\quad 0.7 \leq R_a650/R_a550 \leq 1.0.$$

In formulae (5) and (6), $R_a450$, $R_a550$ and $R_a650$ represent the retardation of film (a), $R_a$, at wavelengths of 450 nm, 550 nm and 650 nm, respectively, and $R_a$ is given by $R_a = (nx_a - ny_a) \times d_a$. Here, $nx_a$ represents the maximum value of refractive index in directions on the film (a) plane, $ny_a$ represents the refractive index in the direction perpendicular to the axis for $nx_a$ in the film (a) plane, $nz_a$ is the refractive index in the direction of thickness of film (a) perpendicular to the axes for $nx_a$ and $ny_a$, and $d_a$ represents the thickness of film (a) in nm.

The optical film of the present invention may have at least one urethane primer layer between the film (a) layer and the film (b) layer.

The polymer exhibiting negative birefringence is preferably a polymer having a fluorene skeleton, more specifically a polyimide having a repeating unit represented by formula (1) below:

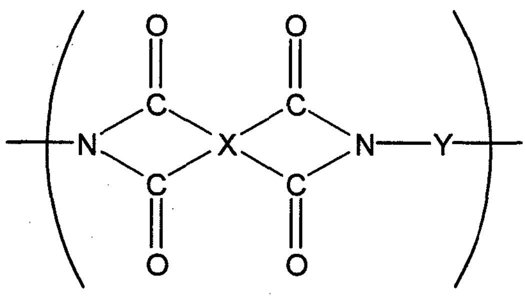

... (1)

In formula (1), X is a tetravalent organic group having an alicyclic structure and Y is a divalent organic group having a fluorene skeleton.]

The cyclic olefin resin is preferably a norbornene resin having a specific constitutional unit.

The optical film of the present invention can be obtained by laminating film (a), which is formed by stretching

unstretched resin film (a') made of the cyclic olefin resin, and film (b), which is formed by stretching unstretched resin film (b') made of the polymer exhibiting negative birefringence.

The optical film of the present invention can be also obtained by coating the resin film (a') with the polymer exhibiting negative birefringence to form the resin film (b') layer, followed by stretching.

The optical film of the present invention may be obtained by coating the resin film (a') with the polymer exhibiting negative birefringence, followed by stretching and further coating with the polymer exhibiting negative birefringence.

The polarizer of the present invention comprises the optical film of the present invention described above. The liquid crystal display of the present invention comprises the optical film or the polarizer of the present invention.

<Effects of the Invention>

The optical film of the present invention retains optical properties such as high transparency, low retardation, and uniformity and stability in retardation when stretched for orientation, which are characteristics of conventional cyclic olefin resin films, and further exhibits good heat resistance, good adhesion or bondability to other materials, and small distortion due to water absorption. In manufacturing this optical film, one can control the retardation provided to transmitted light and its wavelength dependence by said optical film. Furthermore, owing to easy generation and control of the retardation, good viewing angle compensation effects are stably attained when the optical film is used in a liquid crystal display. In particular, the optical film has a good compensation effect on the light leakage (color dropout) caused by the deviation from orthogonality of the axes of polarizers in the cross-Nicol state when the liquid crystal display is viewed from a position in an oblique direction.

Best Mode for Carrying out the Invention

The optical film, polarizer having said optical film, and liquid crystal display having said optical film or polarizer are described in detail below.

In the present invention, "positive birefringence" refers to the property that, when the molecular chain of polymer is made uniaxially oriented by stretching or the like, the refractive index in the stretching direction is greater than the refractive index in the perpendicular direction thereto. The "negative birefringence" refers to the property that, to the contrary, the refractive index in the stretching direction (uniaxially oriented direction) is smaller than the refractive index in the perpendicular direction thereto. Hereinafter, a polymer exhibiting positive birefringence is also called "positively birefringent polymer" and a polymer exhibiting negative birefringence is also called "negatively birefringent polymer".

[Optical film]

<Constitution and optical properties>

The optical film of the present invention is a film comprising at least one film (a) layer made of a positive birefringent cyclic olefin resin and film (b) layer made of a negative birefringent polymer provided on said film (a) layer, wherein formulae (1) to (4) below are satisfied:

$$(1) \quad 0.1 \leq \text{Nz-coefficient} \leq 0.9,$$

$$(2) \quad 0.5 \leq R450/R550 \leq 0.9,$$

$$(3) \quad 1.0 \leq R650/R550 \leq 1.3,$$

and

$$(4) \quad 200\ \text{nm} \leq R550 \leq 350\ \text{nm}.$$

In formulae (1) to (4), Nz-coefficient is given by Nz-coefficient = (nx - nz)/(nx - ny); R450, R550 and R650 represent the retardation R at wavelengths of 450 nm, 550 nm and 650 nm, respectively; and R is given by R = (nx - ny) x d. Here, nx represents the maximum value of refractive index in directions on the film plane, ny represents the refractive index in the direction perpendicular to the axis for nx in the film plane, nz is the refractive index in the direction of film thickness perpendicular to the axes for nx and ny, and d represents the film thickness in nm.

As shown in formula (1), the Nz-coefficient of optical film of the present invention is 0.1 to 0.9, preferably 0.3 to 0.7, and more preferably 0.5 to 0.6. When such optical film is used in a liquid crystal display, the variation of retardation with variation in viewing angle of the display can be reduced, and the contrast ratio is high in all directions. Since the Nz-coefficient of optical film of the present invention depends on Nz-coefficients of film (a) and film (b), an optical film with a desired Nz-coefficient can be obtained by adjusting the both Nz-coefficients of film (a) and film (b) to the above range, that is, 0.1 to 0.9, preferably 0.3 to 0.7, and more preferably 0.5 to 0.6.

For the optical film of the present invention, as shown in formula (2), the R450/R550 value is 0.5 to 0.9, preferably 0.6 to 0.9, and more preferably 0.7 to 0.8, while, as shown in formula (3), the R650/R550 value is 1.0 to 1.3, preferably 1.1 to 1.3, and particularly preferably 1.1 to 1.2, so that the optical film shows so-called reverse wavelength dispersion, which means that the retardation value is lower at shorter wavelengths and higher at longer wavelengths, in the wavelength region of 400 to 700 nm centering 550 nm.

In the optical film of the present invention wherein the retardation shows reverse wavelength dispersion as described above, and, as shown in formula (4), and the R550 value is 200 to 350 nm, preferably 220 to 330 nm, and particularly preferably 250 to 300 nm, the retardation value in each wavelength $\lambda$ approximately equals to $\lambda/2$ in the wavelength region of 400 to 700 nm. Therefore, the optical film can provide a uniform effect on transmitted light, and hence can function as a $\lambda/2$-retardation plate (film), which rotates the polarization plane of linearly polarized light by 90 degrees. In other words, the same retardation effect can be obtained in the whole wavelength region of 400 to 700 nm, thereby preventing coloration due to leakage of light having a particular wavelength.

Therefore, when an optical film with the properties shown in formulae (1) to (4) is used in a liquid crystal display, even if the display is viewed from an oblique direction, the retardation is little changed from approximately $\lambda/2$, and no color dropout (coloration) takes place at any particular wavelength, resulting in good viewing angle compensation effects irrespective of viewing angle.

In the optical film of the present invention, the R550 value is approximately equal to the sum of retardation of film (a) at wavelength of 550 nm, $R_a550$, and retardation of film (b) at wavelength of 550 nm, $R_b550$. Accordingly, by adjusting the optical properties of film (a) and film (b) so that the sum of $R_a550$ and $R_b550$ can be in the above range, the R550 value of optical film can be set in the above range.

The optical film of the present invention has good compensation effects on light leakage (color dropout) caused by deviation from orthogonality of the axes of polarizers in the cross-Nicol state when the liquid crystal display is viewed in an oblique direction. When the optical film of the present invention is used in a liquid crystal display, therefore, in order to make the most use of its viewing angle compensation effects, it is recommended to provide at least one sheet of film (d), which compensates the retardation in the liquid crystal cell component, on the rear side viewed from the viewer of the liquid crystal cell, between the liquid crystal cell and the polarizer, so as to generate a retardation in the thickness direction approximately equal to that in the liquid crystal cell component.

For such film (d), the in-plane retardation is preferably 50 nm or less, more preferably 10 nm or less, and most preferably 0 nm; and the difference between the retardation in the thickness direction generated in the liquid cell component and the retardation in the thickness direction of said film (d) is preferably 50 nm or less, more preferably 30 nm or less, and most preferably 0 to 10 nm.

<Film (a)>

Film (a) constituting the optical film of the present mention is a retardation film made of a positive birefringent cyclic olefin resin, wherein formulae (5) and (6) are satisfied:

$$(5) \quad 1.0 \leq R_a450/R_a550 \leq 1.3,$$

and

$$(6) \quad 0.7 \leq R_a650/R_a550 \leq 1.0.$$

In formulae (5) and (6), $R_a450$, $R_a550$ and $R_a650$ represent the retardation of film (a), $R_a$, at wavelengths of 450 nm, 550 nm and 650 nm, respectively, and $R_a$ is given by $R_a = (nx_a - ny_a) \times d_a$. Here, $nx_a$ represents the maximum value of refractive index in directions on the film (a) plane, $ny_a$ represents the refractive index in the direction perpendicular to the axis for $nx_a$ in the film (a) plane, $nz_a$ is the refractive index in the direction of thickness of film (a) perpendicular to the axes for $nx_a$ and $ny_a$, and $d_a$ represents the thickness of film (a) in nm.

For film (a), as shown in Formula (5), the $R_a450/R_a550$ value is 1.0 to 1.3, preferably 1.0 to 1.2, and particularly preferably 1.0 to 1.1, while, as shown in Formula (6), the $R_a650/R_a550$ value is 0.7 to 1.0, preferably 0.8 to 1.0, and particularly preferably 0.9 to 1.0. Thus, film (a) exhibits wavelength dispersion similar to that of typical retardation films, which means that the retardation value is higher at shorter wavelengths and lower at longer wavelengths. Film (a) is also a film with small wavelength dependence of retardation value.

In terms of reducing the thickness of liquid crystal displays, desirably, the thickness of film (a) is 10,000 nm to 300,000 nm, preferably 30, 000 nm to 200, 000 nm, and particularly preferably 50,000 nm to 100,000 nm.

As the positive birefringent cyclic olefin resin forming film (a), non-limiting examples include norbornene resins. Such norbornene resin is preferably a norbornene resin having constitutional units represented by general formulae (A) and/or (B) below (may be called "constitutional unit (A)" and "constitutional unit (B)", respectively) because such resin has optical properties such as high transparency, low retardation, and uniform and stable retardation when stretched for orientation. Furthermore, such resin is excellent in heat resistance, adhesion or bondability to other materials, and the like, and less distorted due to water absorption.

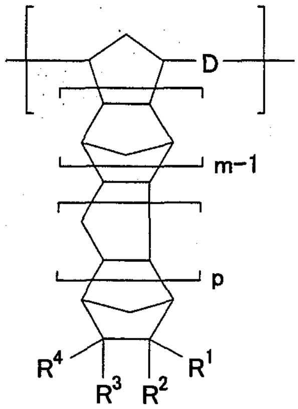

... (A)

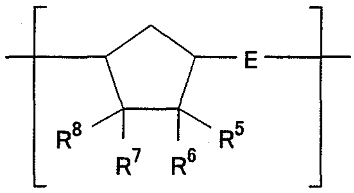

... (B)

In formula (A), m is an integer of 1 or more, and p is 0 or an integer of 1 or more.

In formulae (A) and (B), D and E are each independently a group represented by -CH=CH- or $-CH_2-CH_2-$.

Each of $R^1$ to $R^8$ independently represents a hydrogen atom; a halogen atom such as fluorine, chlorine and bromine; a substituted or unsubstituted hydrocarbon group having 1 to 30 carbon atoms that may have a linkage containing an oxygen atom, a sulfur atom, a nitrogen atom or a silicon atom; or a polar group.

The hydrocarbon group having 1 to 30 carbon atoms includes, for example, alkyl groups such as methyl, ethyl and propyl; cycloalkyl groups such as cyclopentyl and cyclohexyl; and alkenyl groups such as vinyl, allyl and propenyl. The hydrocarbon groups may bond to the ring structure either directly or via a linkage.

Such linkages include a divalent hydrocarbon group having 1 to 10 carbon atoms (for example, alkylene groups represented by $-(CH_2)_m-$, wherein m is an integer of 1 to 10); linkages containing oxygen, nitrogen, sulfur or silicon atom (s) (for example, carbonyl (-CO-), oxycarbonyl (-O(CO)-), sulfone ($-SO_2-$), ether (-O-), thioether (-S-), imino (-NH-), amide bond (-NHCO-, -CONH-), siloxane bond ($-OSi(R_2)-$, wherein R is an alkyl group such as methyl and ethyl)); and others.

The linkage may contain a plurality of these.

$R^1$ and $R^2$, and/or, $R^3$ and $R^4$ may be unified into a divalent hydrocarbon group, either $R^1$ or $R^2$ and either $R^3$ or $R^4$ may bond to each other to form a carbocyclic or heterocyclic ring and said carbocyclic or heterocyclic ring may be monocyclic or polycyclic. $R^5$ to $R^9$ are similar to the above.

The above polar group includes hydroxyl, alkoxy having 1 to 10 carbon atoms (for example, methoxy, ethoxy, etc.), alkoxycarbonyl (for example, methoxycarbonyl, ethoxycarbonyl, etc.), aryloxycarbonyl (for example, phenoxycarbonyl, naphthyloxycarbonyl, fluorenyloxycarbonyl, biphenylyloxycarbonyl, etc.), cyano, amido, imide-ring containing groups, triorganosiloxy (for example, trimethylsiloxy, triethylsiloxy, etc.), triorganosilyl (for example, trimethylsilyl, triethylsilyl, etc.), amino (for example, primary amino, etc.), acyl, alkoxysilyl (for example, trimethoxysilyl, triethoxysilyl, etc.), sulfonyl-containing groups, carboxyl, and others.

The monomer that can form constitutional unit (A) is represented by general formula (A') below.

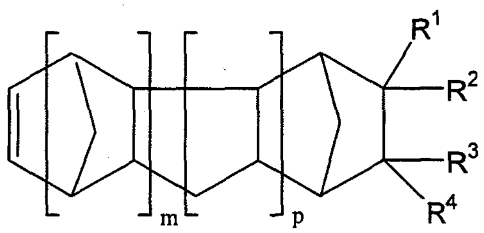

... (A')

In formula (A'), m, p, and $R^1$ to $R^4$ are the same as m, p, and $R^1$ to $R^4$, respectively, in formula (A). Specific examples of such monomer (may be called monomer (A') hereinafter) are given below, but the present invention is not limited thereto. Monomers (A') below may be used singly or in combination of two or more. They are tetracyclo[4.4.0.$1^{2,5}$.$1^{7,10}$]-3-dodecene, pentacyclo[6.5.1.$1^{3,6}$.$0^{2,7}$.$0^{9,13}$]-4-pentadecene, pentacyclo[7.4.0.$1^{2,5}$.$1^{9,12}$.$0^{8,13}$]-3-pentadecene, 8-methoxycarbonyltetracyclo[4.4.0.$1^{2,5}$.$1^{7,10}$]-3-dodecene, 8-ethoxycarbonyltetracyclo[4.4.0.$1^{2,5}$.$1^{7,10}$]-3-dodecene, 8-n-propoxycarbonyltetracyclo[4.4.0.$1^{2,5}$.$1^{7,10}$]-3-dodecene, 8-isopropoxycarbonyltetracyclo[4.4.0.$1^{2,5}$.$1^{7,10}$]-3-dodecene, 8-n-butoxycarbonyltetracyclo[4.4.0.$1^{2,5}$.$1^{7,10}$]-3-dodecene, 8-phenoxycarbonyltetracyclo[4.4.0.$1^{2,5}$.$1^{7,10}$]-3-dodecene, 8-methyl-8-methoxycarbonyltetracyclo[4.4.0.$1^{2,5}$.$1^{7,10}$]-3-dode cene, 8-methyl-8-ethoxycarbonyltetracyclo [4.4.0.$1^{2,5}$.$1^{7,10}$]-3-dodec ene, 8-methyl-8-n-propoxycarbonyltetracyclo[4.4.0.$1^{2,5}$.$1^{7,10}$]-3-do decene, 8-methyl-8-isopropoxycarbonyltetracyclo[4.4.0.$1^{2,5}$.$1^{7,10}$]-3-d odecene, 8-methyl-8-n-butoxycarbonyltetracyclo[4.4.0.$1^{2,5}$.$1^{7,10}$]-3-dodecene, 8-methyl-8-phenoxycarbonyltetracyclo[4.4.0.$1^{2,5}$.$1^{7,10}$]-3-dodecene, pentacyclo[8.4.0.$1^{2,5}$.$1^{9,12}$.$0^{8,13}$]-3-hexadecene, heptacyclo[8.7.0.$1^{3,6}$.$1^{10,17}$.$1^{12,15}$.$0^{2,7}$.$0^{11,16}$]-4-eicosene, heptacyclo[8.8.0.$1^{4,7}$.$1^{11,18}$.$1^{13,16}$.$0^{3,8}$.$0^{12,17}$]-5-heneicosene, 8-ethylidenetetracyclo[4.4.0.$1^{2,5}$.$1^{7,10}$]-3-dodecene, 8-phenyltetracyclo[4.4.0.$1^{2,5}$.$1^{7,10}$]-3-dodecene, 8-methyl-8-phenyltetracyclo[4.4.0.$1^{2,5}$.$1^{7,10}$]-3-dodecene, 8-fluorotetracyclo[4.4.0.$1^{2,5}$.$1^{7,10}$]-3-dodecene, 8-fluoromethyltetracyclo[4.4.0.$1^{2,5}$.$1^{7,10}$]-3-dodecene, 8-difluoromethyltetracyclo[4.4.0.$1^{2,5}$.$1^{7,10}$]-3-dodecene, 8-trifluoromethyltetracyclo[4.4.0.$1^{2,5}$.$1^{7,10}$]-3-dodecene, 8-pentafluoroethyltetracyclo[4.4.0.$1^{2,5}$.$1^{7,10}$]-3-dodecene, 8,8-difluorotetracyclo [4.4.0.$1^{2,5}$.$1^{7,10}$]-3-dodecene, 8,9-difluorotetracyclo[4.4.0.$1^{2,5}$.$1^{7,10}$]-3-dodecene, 8,8-bis(trifluoromethyl)tetracyclo [4.4.0.$1^{2,5}$.$1^{7,10}$]-3-dodece ne, 8,9-bis(trifluoromethyl)tetracyclo[4.4.0$1^{2,5}$$1^{7,10}$]-3-dodece ne, 8-methyl-8-trifluoromethyltetracyclo[4.4.0.$1^{2,5}$.$1^{7,10}$]-3-dode cene, 8,8,9-trifluorotetracyclo[4.4.0.$1^{2,5}$.$1^{7,10}$]-3-dodecene, 8,8,9-tris(trifluoromethyl)tetracyclo[4.4.0.$1^{2,5}$.$1^{7,10}$]-3-dodecene, 8,8,9,9-tetrafluorotetracyclo[4.4.0.$1^{2,5}$.$1^{7,10}$]-3-dodecene, 8,8,9,9-tetrakis (trifluoromethyl)tetracyclo[4.4.0.$1^{2,5}$.$1^{7,10}$] -3-dodecene, 8,8-difluoro-9,9-bis(trifluoromethyl)tetracyclo[4.4.0.$1^{2,5}$.1 $^{7,10}$]-3-dodecene, 8,9-difluoro-8,9-bis(trifluoromethyl)tetracyclo[4.4.0.$1^{2,5}$.1 $^{7,10}$]-3-dodecene, 8,8,9-trifluoro-9-trifluoromethyltetracyclo[4.4.0.$1^{2,5}$.$1^{7,10}$] -3-dodecene, 8,8,9-trifluoro-9-trifluoromethoxytetracyclo[4.4.0.$1^{2,5}$.$1^{17,1}$ $^{0}$]-3-dodecene, 8,8,9-trifluoro-9-pentafluoropropoxytetracyclo[4.4.0.$1^{2,5}$ .$1^{7,10}$]-3-dodecene, 8-fluoro-8-pentafluoroethyl-9,9-bis(trifluoromethyl)tetracy clo[4.4.0.$1^{2,5}$.$1^{7,10}$] -3-dodecene, 8,9-difluoro-8-heptafluoroisopropyl-9-trifluoromethyltetrac yclo [4.4.0.$1^{2,5}$.$1^{7,10}$]-3-dodecene, 8-chloro-8,9,9-trifluorotetracyclo[4.4.0.$1^{2,5}$.$1^{7,10}$]-3-dodece ne, 8,9-dichloro-8,9-bis(trifluoromethyl)tetracyclo[4.4.0.$1^{2,5}$.1 $^{7,10}$]-3-dodecene, 8-(2,2,2-trifluoroethoxycarbonyl)tetracyclo[4.4.0.$1^{2,5}$.$1^{7,10}$] -3-dodecene, 8-methyl-8-(2,2,2-trifluoroethoxycarbonyl)tetracyclo[4.4.0. $1^{2,5}$.$1^{7,10}$]-3-dodecene, and others.

Among these specific examples, 8-methyl-8-methoxycarbonyltetracyclo[4.4.0.$1^{2,5}$.$1^{7,10}$]-3-dode cene is preferred because a copolymer obtained therefrom has an increased glass transition temperature, hardly suffers from adverse effects such as distortion due to water absorption, and keeps water absorptivity enough to give good adhesion or bondability to other materials.

The monomer that can form constitutional unit (B) is represented by general formula (B') below.

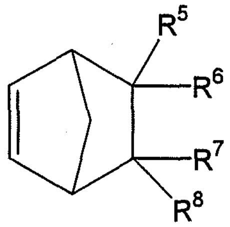

... (B')

In formula (B'), $R^5$ to $R^8$ are the same as $R^5$ to $R^8$ in formula (B). Specific examples of these monomers (may be called monomer (B') hereinafter) are given below, but the present invention is not limited thereto. Monomers (B') below may be used singly or in combination of two or more. They are bicyclo[2.2.1]hept-2-ene, 5-methylbicyclo[2.2.1]hept-2-ene, 5-ethylbicyclo[2.2.1]hept-2-ene, 5-methoxycarbonylbicyclo[2.2.1]hept-2-ene, 5-methyl-5-methoxycarbonylbicyclo[2.2.1]hept-2-ene, 5-phenoxycarbonylbicyclo[2.2.1]hept-2-ene, 5-methyl-5-phenoxycarbonylbicyclo[2.2.1]hept-2-ene, 5-cyanobicyclo[2.2.1]hept-2-ene, 5-ethylidenebicyclo[2.2.1]hept-2-ene, 5-phenylbicyclo[2.2.1]hept-2-ene, 5-(2-naphthyl)bicyclo[2.2.1]hept-2-ene (including both α- and β-isomers), 5-fluorobicyclo[2.2.1]hept-2-ene, 5-fluoromethylbicyclo[2.2.1]hept-2-ene, 5-trifluoromethylbicyclo[2.2.1]hept-2-ene, 5-pentafluoroethylbicyclo[2.2.1]hept-2-ene, 5,5-difluorobicyclo[2.2.1]hept-2-ene, 5,6-difluorobicyclo[2.2.1]hept-2-ene, 5,5-bis(trifluoromethyl)bicyclo[2.2.1]hept-2-ene, 5,6-bis(trifluoromethyl)bicyclo[2.2.1]hept-2-ene, 5-methyl-5-trifluoromethylbicyclo[2.2.1]hept-2-ene, 5,5,6-trifluorobicyclo[2.2.1]hept-2-ene, 5,5,6-tris(fluoromethyl)bicyclo[2.2.1]hept-2-ene, 5,5,6,6-tetrafluorobicyclo[2.2.1]hept-2-ene, 5,5,6,6-tetrakis(trifluoromethyl)bicyclo[2.2.1]hept-2-ene, 5,5-difluoro-6,6-bis(trifluoromethyl)bicyclo[2.2.1]hept-2-e ne, 5,6-difluoro-5,6-bis(trifluoromethyl)bicyclo[2.2.1]hept-2-e ne, 5,5,6-trifluoro-5-trifluoromethylbicyclo[2.2.1]hept-2-ene, 5-fluoro-5-pentafluoroethyl-6,6-bis(trifluoromethyl)bicyclo [2.2.1]hept-2-ene, 5,6-difluoro-5-heptafluoroisopropyl-6-trifluoromethylbicycl o[2.2.1]hept-2-ene, 5-chloro-5,6,6-trifluorobicyclo[2.2.1]hept-2-ene, 5,6-dichloro-5,6-bis(trifluoromethyl)bicyclo[2.2.1]hept-2-e ne, 5,5,6-trifluoro-6-trifluoromethoxybicyclo[2.2.1]hept-2-ene, 5,5,6-trifluoro-6-heptafluoropropoxybicyclo[2.2.1]hept-2-en e, 5-(4-phenylphenyl)bicyclo[2.2.1]hept-2-ene, 4-(bicyclo[2.2.1]hepta-5-en-2-yl)phenylsulfonylbenzene, tricyclo[4.3.0.$1^{2,5}$]deca-3,7-dien, tricyclo[5.2.1.$0^{2,6}$]-8-decene, tricyclo[4.4.0.$1^{2,5}$]-3-undecene, and others.

As preference with respect to $R^5$ to $R^8$ in formula (B') among these monomers, preferred ones are a monomer wherein $R^5$ to $R^8$ are all hydrogen atoms, a monomer wherein one of $R^5$ to $R^8$ is an hydrocarbon group having 1 to 30 carbon atoms and the others are hydrogen atoms, and a monomer (B') wherein any two of $R^5$ to $R^8$ are linked to each other via an alkylene group having 3 to 5 carbon atoms, because such monomers significantly improve the ductility of resultant optical films. Particularly preferred are a monomer wherein $R^5$ to $R^8$ are all hydrogen atoms and a monomer wherein any one of $R^5$ to $R^8$ is a methyl, ethyl or phenyl group and the others are all hydrogen atoms, considering also heat resistance. Furthermore, bicyclo[2.2.1]hept-2-ene, 5-phenylbicyclo[2.2.1]hept-2-ene and tricyclo [4.3.0.$1^{2,5}$]-deca-3,7-diene are preferred in terms of ease in synthesis.

The norbornene resin can be obtained by ring-opening (co)polymerization of monomer (A') and/or monomer (B') according to a publicly known method (for example, method described in Japanese Patent Laid-open Publication No. 2003-14901). Here, as monomer (A') and/or monomer (B'), two or more kinds of monomers may be used for each. With such combination, good balance between optical properties and film strength may be attained more easily. Monomers other than monomers (A') and (B'), for example, cycloolefins such as cyclobutene, cyclopentene, cycloheptene, cyclooctene, tricyclo[5.2.1.$0^{2,6}$]-3-decene and dicyclopentadiene may be also copolymerized. Furthermore, hydrogenated products of the ring-opened (co)polymer obtained may be also used.

The logarithmic viscosity of norbornene resin measured in chloroform (at 30°C) is 0.2 to 5 dL/g, preferably 0.3 to 4 dL/g, and particularly preferably 0.5 to 3 dL/g. When the logarithmic viscosity exceeds the above range, the processability might be worsened because of the excessively high viscosity of solution, whereas when it is below the above range, the film strength might be lowered.

For the molecular weight of norbornene resin, the number-average molecular weight (Mn), in terms of polystyrene measured by gel permeation chromatography (GPC), is generally in a range of 8, 000 to 1, 000, 000, preferably 10, 000 to 500, 000, and particularly preferably 20,000 to 100,000; and the weight-average molecular weight (Mw) is generally in a range of 20,000 to 3,000,000, preferably 30,000 to 100,000, and particularly preferably 40,000 to 500,000. The molecular weight distribution represented as Mw/Mn is generally 1.5 to 10, preferably 2 to 8, and particularly preferably 2.5 to 5.

The saturated water absorption ratio at 23°C of norbornene resin is generally 0.001 to 1% by weight, preferably 0.01 to 0.7% by weight, more preferably 0.1 to 0.5% by weight. When the saturated water absorption ratio is within such range, the resin maintains various optical properties, such as transparency, retardation and uniformity of the retardation, and dimensional accuracy even under conditions of high temperature and humidity. Furthermore, in this case, no peeling

occurs during use owing to excellent adhesion or bondability to other materials, and the resin has good compatibility with additives such as an antioxidant, thereby enlarging allowable range of blending. Here, the saturated water absorption ratio refers to a value determined by measuring the weight increase of specimen after immersed in water at 23°C for one week according to ASTMD 570.

The solubility parameter (SP) value of norbornene resin is preferably 10 to 30 $MPa^{1/2}$, more preferably 12 to 25 $MPa^{1/2}$, and particularly preferably 15 to 20 $MPa^{1/2}$. When the SP value is within the above range, the norbornene resin can well dissolve in general-purpose solvents, enabling consistent manufacture of films with uniform properties. Further, good bondability and adhesion to substrates can be attained, and the water absorption ratio can be properly controlled.

The glass transition temperature (Tg) of norbornene resin depends on the types and composition ratio of constitutional units (A) and/or (B) in the norbornene resin, presence or absence of additives, and others. It is generally 80 to 350°C, preferably 100 to 250 °C, and more preferably 120 to 200°C. When Tg is lower than the above range, the thermal distortion temperature decreases, which may cause a problem in heat resistance or may cause large temperature dependence of optical properties on resultant optical films. When Tg is higher than the above range, thermal degradation of the resin is more likely to occur when processed with heating to a temperature near Tg in stretching or other processes.

The norbornene resin may be blended with publicly known thermoplastic resins, thermoplastic elastomers, rubbery polymers, organic fine particles, inorganic fine particles, antioxidants, ultraviolet absorbers, release agents, fire retardants, antibacterial agents, wood powder, coupling agents, petroleum resins, plasticizers, colorants, lubricants, antistatic agents, silicone oil, foaming agents, or the like so far as neither transparency nor heat resistance is impaired.

<Film (b)>

Film (b) layer constituting the optical film of the present invention is a retardation film made of a negative birefringent polymer, wherein formulae (7) and (8) below are satisfied:

$$(7)\quad 1.0 \leq R_b450/R_b550 \leq 2.0$$

$$(8)\quad 0.7 \leq R_b650/R_b550 \leq 1.0$$

In formulae (7) and (8), $R_b450$, $R_b550$ and $R_b650$ represent the retardation of film (b), $R_b$, at wavelengths of 450 nm, 550 nm and 650 nm, respectively, and $R_b$ is given by $R_b = (nx_b - ny_b) \times d_b$. Here, $nx_b$ represents the minimum value of refractive index in directions on the film (b) plane, $ny_b$ represents the refractive index in the direction perpendicular to the axis for $nx_b$ in the film (b) plane, $nz_b$ is the refractive index in the direction of thickness of film (b) perpendicular to the axes for $nx_b$ and $ny_b$, and $d_b$ represents the thickness of film (b) in nm.

For film (b), as shown in formula (7), the $R_b450/ R_b550$ value is 1.0 to 2.0, preferably 1.05 to 1.8, and particularly preferably 1.1 to 1.5, while as shown in formula (8), the $R_b650/R_b550$ value is 0.7 to 1.0, preferably 0.7 to 0.95, and particularly preferably 0.7 to 0.9. Thus, film (b) exhibits a wavelength dispersion similar to that of typical retardation films, which means that the retardation value (absolute value) is higher at shorter wavelengths and lower at longer wavelengths, and film (b) is a film having a relatively large wavelength dependence of retardation value.

The thickness of film (b) is 100 nm to 200,000 nm, preferably 1,000 nm to 100,000 nm, particularly preferably 1,000 nm to 50,000 nm, and most preferably 1,000 nm to 10,000 nm in terms of reducing the thickness of liquid crystal displays.

The above negative birefringent polymer includes, for example, a styrene (co)polymer such as polystyrene and polyvinylnaphthalene, in which (a) vinyl monomer(s) having an aromatic ring in its side chain is(are) (co)polymerized, polymethyl methacrylate, methyl methacrylate copolymer, another polymer having a benzene or fluorene skeleton in its side chain, and others. In the present invention, a polymer having a fluorene skeleton in its side chain, specifically, fluorene skeleton-containing polyimide, is preferred. More specifically, a polyimide having a repeating unit represented by formula (1) below (may be called "polyimide (1)" hereinafter) is particularly preferred in terms of adhesion to substrates, retardation properties and wavelength dispersion of retardation.

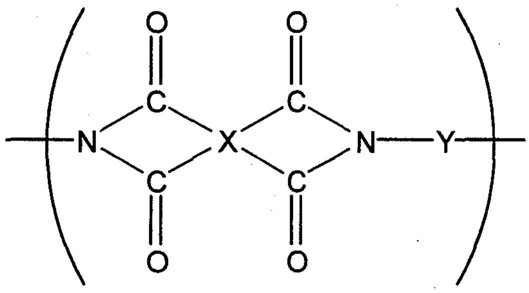

. . . (1)

In formula (1), X is a tetravalent organic group having an alicyclic structure and Y is a divalent organic group having a fluorene skeleton.

Polyimide (1) can be obtained by reaction of an alicyclic structure-containing tetracarboxylic dianhydride ("tetracarboxylic dianhydride" may be called simply "anhydride" hereinafter) with a fluorene skeleton-containing diamine to yield a polyamic acid, followed by imidation of the polyamic acid.

The alicyclic structure-containing tetracarboxylic dianhydride includes, for example, 1,2,3,4-cyclobutanetetracarboxylic dianhydride, 1,2-dimethyl-1,2,3,4-cyclobutanetetracarboxylic dianhydride, 1,3-dimethyl-1,2,3,4-cyclobutanetetracarboxylic dianhydride, 1,3-dichloro-1,2,3,4-cyclobutanetetracarboxylic dianhydride, 1,2,3,4-tetramethyl-1,2,3,4-cyclobutanetetracarboxylic dianhydride, 1,2,3,4-cyclopentanetetracarboxylic dianhydride, 1,2,4,5-cyclohexanetetracarboxylic dianhydride, 3,3'4,4'-dicyclohexyltetracarboxylic dianhydride, 2,3,5-tricarboxycyclopentylacetic acid dianhydride, 3,5,6-tricarboxynorbornane-2-acetic acid dianhydride, 2,3,4,5-tetrahydrofurantetracarboxylic dianhydride, 1,3,3a,4,5,9b-hexahydro-5-(tetrahydro-2,5-dioxo-3-furanyl)n aphtho[1,2-c]furan-1,3-dione, 5-(2,5-dioxotetrahydrofuranyl)-3-methyl-3-cyclohexene-1,2-d icarboxylic anhydride, bicyclo[2.2.2]oct-7-ene-2,3,5,6-tetracarboxylic dianhydride, and the like.

The polyimide used in the present invention may comprises an anhydride other than the above alicyclic structure-containing anhydrides as a polymerization component. Such anhydrides include, for example, butanetetracarboxylic dianhydride, pyromellitic dianhydride, 3,3',4,4'-benzophenonetetracarboxylic dianhydride, 3,3',4,4'-biphenylsulfonetetracarboxylic dianhydride, 1,4,5,8-naphthalenetetracarboxylic dianhydride, 2,3,6,7-naphthalenetetracarboxylic dianhydride, 3,3',4,4'-tetracarboxybiphenyl ether dianhydride, 3,3',4,4'-dimethyldiphenylsilanetetracarboxylic dianhydride, 3,3',4,4'-tetraphenylsilanetetracarboxylic dianhydride, 1,2,3,4-furantetracarboxylic dianhydride, 4,4'-bis(3,4-dicarboxyphenoxy)diphenyl sulfide dianhydride, 4,4'-bis(3,4-dicarboxyphenoxy)diphenyl sulfone dianhydride, 4,4'-bis(3,4-dicarboxyphenoxy)diphenylpropane dianhydride, 3,3',4,4'-perfluoroisopropylidenedi(phthalic anhydride), 3,3',4,4'-biphenyltetracarboxylic dianhydride, bis(phthalic anhydride)phenylphosphine oxide, p-phenylenebis(triphenylphthalic anhydride), m-phenylenebis(triphenylphthalic anhydride), bis(triphenylphthalic anhydride)-4,4'-diphenyl ether, bis(triphenylphthalic anhydride)-4,4'-diphenylmethane, ethylene glycol bis(anhydrotrimellitate), propylene glycol bis(anhydrotrimellitate), 1,4-butanediol bis(anhydrotrimellitate), 1,6-hexanediol bis(anhydrotrimellitate), 1,8-octanediol bis(anhydrotrimellitate), 2,2-bis(4-hydroxyphenyl)propane bis(anhydrotrimellitate), and others.

The above fluorene skeleton-containing diamine includes, for example, 2,7-diaminofluorene, 9,9-bis(4-aminophenyl)fluorene, and the like.

The polyimide used in the present invention may comprises a diamine other than the above fluorine skeleton-containing diamines as a polymerization component. Such diamines include, for example,

aromatic diamines such as p-phenylenediamine, m-phenylenediamine, 4,4'-diaminodiphenylmethane, 4,4'-diaminodiphenylethane, 4,4-diaminodiphenyl sulfide, 4,4'-diaminodiphenyl sulfone, 3,3'-dimethyl-4,4'-diaminobiphenyl, 4,4'-diaminobenzanilide, 4,4'-diaminodiphenyl ether, 1,5-diaminonaphthalene, 3,3-dimethyl-4,4'-diaminobiphenyl, 5-amino-1-(4'-aminophenyl)-1,3,3-trimethylindane, 6-amino-1-(4'aminophenyl)-1,3,3-trimethylindane, 3,4'-diaminodiphenyl ether, 3,3'-diaminobenzophenone, 3,4'-diaminobenzophenone, 4,4'-diaminobenzophenone, 2,2-bis[4-(4-aminophenoxy)phenyl)propane, 2,2-bis[4-(4-aminophenoxy)phenyl)hexafluoropropane, 2,2-bis(4-aminophenyl)hexafluoropropane, 2,2-bis[4-(4-aminophenoxy)phenyl] sulfone, 1,4-bis(4-aminophenoxy)benzene, 1,3-bis(4-aminophenoxy)benzene, 1,3-bis(3-aminophenoxy)benzene, 9,9-bis(4-aminophenyl)-10-dihydroanthracene, 4,4'-methylenebis(2-chloroaniline), 2,2',5,5'-tetrachloro-4,4'-diaminobiphenyl, 2,2'-dichloro-4,4'-diamino-5,5'-dimethoxybiphenyl, 3,3'-dimethoxy-4,4'-diaminobiphenyl, 1,4,4'-(p-phenyleneisopropylidene)bisaniline, 4,4'-(m-phenyleneisopropylidene)bisaniline, 2,2'-bis[4-(4-amino-2-trifluoromethylphenoxy)phenyl)hexaflu oropropane, 4,4'-diamino-2,2'-bis(trifluoromethyl)biphenyl and 4,4'-bis[(4-amino-2-trifluoromethyl)phenoxy]octafluorobiphe nyl;

aliphatic or alicyclic diamines such as 1,1-m-xylylenediamine, 1,3-propanediamine, tetramethylenediamine, pentamethylenediamine, hexamethylenediamine, heptamethylenediamine, octamethylenediamine, nonamethylenediamine, 4,4-diaminoheptamethylenediamine, 1,4-diaminocyclohexane, isophoronediamine, tetrahydrodicyclopentadienylenediamine, hexahydro-4,7-methanoindanylenedimethylenediamine, tricyclo[6.2.1.0$^{2,7}$]undecylenedimethyldiamine and 4,4'-methylenebis(cyclohexylamine);

diamines with two primary amino groups and a nitrogen atom other than said primary amino group within a molecule such as 2,3-diaminopyridine, 2,6-diaminopyridine, 3,4-diaminopyridine, 2,4-diaminopyrimidine, 5,6-diamino-2,3-dicyanopyrazine, 5,6-diamino-2,4-dihydroxypyrimidine, 2,4-diamino-6-dimethylamino-1,3,5-triazine, 1,4-bis(3-aminopropyl) piperazine, 2,4-diamino-6-isopropoxy-1,3,5-triazine, 2,4-diamino-6-methoxy-1,3,5-triazine, 2,4-diamino-6-phenyl-1,3,5-triazine, 2,4-diamino-6-methyl-s-triazine, 2,4-diamino-1,3,5-triazine, 4,6-diamino-2-vinyl-s-triazine, 2,4-diamino-5-phenylthiazole, 2,6-diaminopurine, 5,6-diamino-1,3-dimethyluracil, 3,5-diamino-1,2,4-triazole, 6,9-diamino-2-ethoxyacridine lactate, 3,8-diamino-6-phenylphenanthridine, 1,4-diaminopiperazine, 3,6-diaminoacridine and bis(4-aminophenyl) phenylamine; diaminoorganosiloxanes, and the like.

The reaction of an anhydride with a diamine is carried out, at a ratio of 0.2 to 2 equivalents, more preferably 0.3 to 1.4 equivalents, of anhydride groups in the anhydride with respect to one equivalent of amino groups in the diamine, in an organic solvent at generally 0 to 150°C, preferably 0 to 100°C. Reaction under such conditions yields a polyamic acid with sufficiently high molecular weight.

The above organic solvent is not particularly limited so far as it can dissolve the anhydride and the diamine used as reactants and the polyamic acid formed as the polymeric product. Specifically, there may used aprotic polar solvents such as γ-butyrolactone, N-methyl-2-pyrrolidone, N,N-dimethylformamide, N,N-dimethylacetamide, dimethyl sulfoxide, tetramethylurea and hexamethylphosphoramide; and phenolic solvents such as m-cresol, xylenol, phenol and halogenated phenols; and the like.

The organic solvent is preferably used in such an amount that the total amount of the anhydride and the diamine used as reactants is 0.1 to 30% by weight with respect to the total amount of reaction solution. As the organic solvent, there may be concomitantly used alcohols, ketones, esters, ethers, halogenated hydrocarbons, hydrocarbons, or the like, which are poor solvents for the polyamic acid to be formed, as long as the resultant polyamic acid is not precipitated.

Imidation of the polyamic acid thus obtained is carried out by heating or by treating with a dehydrating agent and an imidation catalyst so that dehydration and ring-closure proceed to yield the polyimide (1). The temperature in thermal imidation is generally 60 to 250°C, and preferably 100 to 170°C. Imidation at such temperature can yield an imide polymer with a sufficiently high molecular weight. Polyimide (1) used in the present invention may be partially imidated polymer, in which the polyamic acid is not completely imidated.

As the dehydrating agents, there may be used, for example, acetic anhydride, propionic anhydride, trifluoroacetic anhydride, and the like. The amount of such dehydrating agents is preferably 1.6 to 20 moles per mole of repeating units of the polyamic acid.

The imidation catalyst used here includes, for example, pyridine, collidine, lutidine, tertiary amines such as triethylamine, and the like, but is not limited thereto. Such imidation catalyst is preferably used in an amount of 0.5 to 10 mole per mole of the dehydrating agent used. The organic solvent used in the imidation includes the organic solvents listed for use in synthesis of the polyamic acid. In this imidation, the reaction temperature is generally 0 to 180°C, and preferably 60 to 150°C.

The value of logarithmic viscosity $\eta_{ln}$ of polyimide thus obtained is generally 0.05 to 10 dL/g, and preferably 0.05 to 5 dL/g. Here, the value of logarithmic viscosity $\eta_{ln}$ is the one obtained by results measured at 30°C in a solution using N-methyl-2-pyridone as a solvent at a polymer concentration of 0.5 g/100 mL from the equation below:

[Mathematical Formula 1]

$$\eta_{ln} = [\ln(\text{flow-down time of solution/ flow-down time of solvent})]/\text{concentration of polymer solution.}$$

<Method for manufacturing optical film>

The optical film of the present invention may be manufactured by laminating film (a) and film (b), wherein film (a) is formed by stretching resin film (a') made of the above cyclic olefin resin so as to exhibit the specific optical properties, whereas film (b) is formed by stretching resin film (b') made of the above negative birefringent polymer so as to exhibit the specific optical properties.

On laminating film (a) and film (b), these films are laminated through an appropriate adhesive or pressure-sensitive adhesive so that the stretching axes of films are aligned parallel to each other. For example, the films are laminated using an acrylic UV adhesive with adjusting the thickness of adhesive layer to generally 10 μm or less, and preferably 5 μm or less. With such parallel alignment of the stretching axes of individual films, the values of optical properties such as retardation can be properly adjusted in the optical film finally obtained, and hence the optical film has good viewing angle compensation effects.

Alternatively, the optical film of the present invention may be also obtained by coating the resin film (a') with the negative birefringent polymer to form resin film (b') layer, thereby yielding laminated film (c), which comprises resin film (a') layer and resin film (b') layer, and said laminated film (c) is stretched with, for example, free-end uniaxial stretching, strip-biaxial stretching or biaxial stretching process. Among these, strip-biaxial stretching and biaxial stretching are preferred since each component of refractive index can be uniformly controlled. On this occasion, through stretching of the laminated film (c), resin film (a') layer is stretched to form resin film (a) layer with the above properties, while resin film (b') layer is stretched to form resin film (b) layer with the above properties.

The optical film of the present invention may be also obtained by a method in which, similarly to the above, laminate film (c) is formed and said laminate film (c) is stretched, for example, with free-end uniaxial stretching, strip-biaxial stretching or biaxial stretching process, followed by further coating with the negative birefringent polymer. As the stretching process used here, strip-biaxial stretching and biaxial stretching are preferred as the above case for uniformly controlling each component of refractive index. When the stretched film (b') layer is further coated with the negative birefringent polymer after stretching of laminated film (c) in this way, a composite layer composed of the stretched film (b') layer and the layer of negative birefringent polymer, which is newly formed by coating, serves as film (b) layer with the above properties. In this case, optical properties such as retardation can be controlled more easily, and hence this method is preferred.

The optical film of the present invention may have at least one urethane primer layer between film (a) layer and film (b) layer. The urethane polymer to form such urethane primer layer is not particularly limited so far as it is a resin having urethane bonds. It includes, for example, a polymer obtained by reaction of a polyol with a polyisocyanate. In order to stably dissolve or disperse the urethane resin of the present invention in an organic solvent and/or water and to improve coatability of an adhesive and bondability between a substrate and the adhesive, it is also preferred to add a hydrophilic group-containing compound, together with the polyol and the polyisocyanate, as a polymerization component.

The above polyol includes polyether polyols, polyester polyols, polyacryl polyols, and the like. Among them, polyether polyols are particularly preferred.

Such polyether polyols include, for example, a polyether polyol obtained by ring-opening copolymerization of an ion-polymerizable cyclic compound with a polyhydric alcohol.

The polyhydric alcohol includes ethylene glycol, polyethylene glycol, propylene glycol, polypropylene glycol, polytetramethylene glycol, polyhexamethylene glycol, polyheptamethylene glycol, polydecamethylene glycol, glycerol, trimethylolpropane, pentaerythritol, bisphenol A, bisphenol F, hydrogenated bisphenol A, hydrogenated bisphenol F, hydroquinone, naphthohydroquinone, anthrahydroquinone, 1,4-cyclohexanediol, tricyclodecanediol, tricyclodecanedimethanol, pentacyclopentadecanediol, pentacyclopentadecanedimethanol, and the like. These may be used singly or in combination of two or more.

The ion-polymerizable cyclic compound includes, for example, cyclic ethers such as ethylene oxide, propylene oxide, 1,2-butylene oxide, butene-1-oxide, isobutene oxide, 3,3-bischloromethyloxetane, tetrahydrofuran, 2-methyltetrahydrofuran, 3-metyltetrahydrofuran, dioxane, trioxane, tetraoxane, cyclohexene oxide, styrene oxide, epichlorohydrin, glycidyl methacrylate, allyl glycidyl ether, allyl glycidyl carbonate, butadiene monoxide, isoprene monoxide, vinyloxetane, vinyltetrahydrofuran, vinylcyclohexene oxide, phenyl glycidyl ether, butyl glycidyl ether and glycidyl benzoate. These may be used singly or in combination of two or more.

There may be also used a polyether polyol obtained by ring-opening copolymerization of the ion-polymerizable cyclic compound with a cyclic imine such as ethyleneimine, a cyclic lactone such as β-propiolactone and glycolic acid lactide, or a dimethylcyclopolysiloxane. In the ring-opened copolymer of such ion-copolymerizable cyclic compound, the monomer units may be linked randomly or in a blocked manner.

Among these polyether polyols, polytetramethylene glycol, polyhexamethylene glycol, and the like are preferred.

As the polyisocyanate, there may be used a polyisocyanate generally used in manufacturing polyurethane without particular limitation. It includes, for example, 2,4-tolylenediisocyanate, 2,6-tolylenediisocyanate, 1,3-xylylenediisocyanate, 1,4-xylyenediisocyanate, 1,5-naphthalenediisocyanate, m-phenylenediisocyanate, p-phenylenediisocyanate, 3,3'-dimethyl-4,4'-diphenylmethanediisocyanate, 4,4'-diphenylmethanediisocyanate, 3,3'-dimethylphenylenediisocyanate, 4,4'-biphenylenediisocyanate, 1,6-hexanediisocyanate, isophoronediisocyanate, methylenebis(4-cyclohexylisocyanate), 2,2,4-trimethylhexamethylenediisocyanate, bis(2-isocyanatoethyl) fumarate, 6-isopropyl-1,3-phenyldiisocyanate, di(4-isocyanatophenyl)propane, lysinediisocyanate, hydrogenated diphenylmethanediisocyanate, hydrogenated xylylenediisocyanate, tetramethylxylylenediisocyanate, 2,5(or 6)-bis(isocyanatomethyl)bicyclo[2.2.1]heptane, and others. Such polyisocyanates may be used singly or in combination of two or more. Among these polyisocianates,

isophoronediisocyanate is preferred.

The hydrophilic group-containing compound includes ionic compounds that contain at least one active hydrogen atom and at least one functional group selected from the group consisting of a carboxyl group and a sulfonic acid group within a molecule.

Such hydrophilic group-containing compounds include, for example, sulfonic acids, such as 2-oxyethanesulfonic acid, phenolsulfonic acid, sulfobenzoic acid, sulfosuccinic acid, 5-sulfoisophthalic acid, sulfanilic acid, 1,3-phenylenediamine-4,6-disulfonic acid and 2,4-diaminotoluene-5-sulfonic acid, and their derivatives; and carboxyl group-containing compounds, such as 2,2-dimethylolpropionic acid, 2,2-dimethylolbutyric acid, 2,2-dimethylolvaleric acid, dioxymaleic acid, 2,6-dioxybenzoic acid and 3,4-diaminobenzoic acid, and their derivatives.

In the reaction of these compounds, it is generally preferred to use a urethane-formation catalyst such as copper naphthenate, cobalt naphthenate, zinc naphthenate, di-n-butyltin laurate, triethylamine, 1,4-diazabicyclo[2.2.2]octane and 2, 6,7-trimethyl-1, 4-diazabicyclo [2.2.2] octane in an amount of 0.01 to 1 part by weight with respect to 100 parts by weight of the total amount of reactants. The reaction temperature is generally 10 to 90°C, and preferably 30 to 80°C.

For the polyurethane resin used in the present invention, the number-average molecular weight is generally about 1,000 to about 200,000.

The method to form urethane primer layer is not particularly limited to, but includes spin coating, wire coating, bar coating, roll coating, blade coating, curtain coating, screen printing, and others.

The temperature in drying the polyurethane composition is exemplified by, but not particularly limited to, 60 to 150°C. It is better to make the residual solvent content in polyurethane layer as low as possible; it is generally 3% by weight or less, preferably 1% by weight or less, and more preferably 0.5% by weight or less.

For the polyurethane layer used in the present invention, the thickness is not particularly limited. As an approximate value, it is generally 0.01 to 5 μm, preferably 0.05 to 4 μm, and more preferably 0.1 to 3μm. If the polyurethane layer is too thin, desired adhesion may not be attained. If it is too thick, when an adhesive is applied thereon, the polyurethane layer may be dissolved, making the film turbid.

For the polyurethane layer used in the present invention, desirably, the total light transmission is generally 80% or more, and preferably 90% or more.

The formation of a urethane primer layer between film (a) layer and film (b) layer improves coatability of an adhesive in lamination of film (a) layer and film (b) layer, providing long-lasting stable adhesion.

Resin film (a') can be obtained from the above cyclic olefin resin by a publicly known film formation method such as melt molding methods and solution flow casting methods (solution-casting methods). Solution cast methods are preferred because it provides uniform film thickness and good surface flatness. Melt molding methods are also preferred from the aspect of productivity and cost. Similarly, resin film (b') can be also obtained using the above negative birefringent polymer by a publicly known film formation method, preferably a solution-casting method.

The solution-casting method includes, for example, a method in which the resin (cyclic olefin resin or negative birefringent polymer) is dissolved or dispersed in a proper solvent to prepare a liquid in a proper concentration, this liquid is poured or applied onto an appropriate substrate and dried, and then the resultant resin film is peeled from the substrate.

The concentration of resin component in the resin solution is generally 0.1 to 90% by weight, preferably 1 to 50% by weight, and more preferably 5 to 35% by weight. When the concentration of resin component is lower than the above range, the resin film obtained may not have sufficient thickness, and its surface flatness may be poor because of foaming caused by solvent evaporation and the like. On the other hand, when the concentration of resin component exceeds the above range, too high viscosity of the resin solution may disable formation of a film with uniform thickness and surface state.

The viscosity at room temperature of resin solution is generally 1 to 1,000,000 mPa·s, preferably 10 to 100,000 mPa·s, more preferably 100 to 50,000 mPa·s, and particularly preferably 1,000 to 40,000 mPa·s.

In case of resin film (a'), the solvent used to prepare a resin solution includes, for example, aromatic solvents such as benzene, toluene and xylene; cellosolves such as methyl cellosolve, ethyl cellosolve and 1-methoxy-2-propanol; ketones such as diacetone alcohol, acetone, cyclohexanone, methyl ethyl ketone, 4-methyl-2-pentanone, cyclohexanone, ethylcyclohexanone and 1,2-dimethylcyclohexanone; esters such as methyl lactate and ethyl lactate; halogen-containing solvents such as 2,2,3,3-tetrafluoro-1-propanol, methylene chloride and chloroform; ethers such as tetrahydrofuran and dioxane; alcohols such as 1-pentanol and 1-butanol; and others. In case of resin film (b'), the solvent includes, for example, N-methyl-2-pyrrolidone, γ-butyrolactone, and the like in addition to the above solvents. The above solvents may be used singly or in combination of two or more.

The resin may be dissolved to the solvent at room temperature or higher temperature. Sufficient stirring gives a homogeneous solution. If necessary, air bubbles remaining in the solution are removed by warming or standing the solution or by other measures. When coloration of the film is necessary, colorant such as dyes and pigments may be added to the solution as appropriate. In order to improve the surface flatness of film, a leveling agent may be blended. As such leveling agent, there may be used any general leveling agent without particular limitation, for example, a fluorine-containing nonionic surfactant, a specific acrylic resin-type leveling agent and silicone-type leveling agent.

The substrate used in solution-casting method includes, for example, metal drums, steel belts, polyester films made of polyethylene terephthalate (PET), polyethylene naphthalate (PEN) or the like, polytetrafluoroethylene belts, and others. As described above, when resin film (b') layer is formed, resin film (a') may be used as a substrate. In this case, the resin film (b') layer formed is used without peeling from the resin film (a') used as the substrate. In this case, if the above urethane primer layer is further provided between (a') layer and (b') layer, there may be obtained the optical film of the present invention with good adhesion and excellent long-term stability.

When polyester films are used as the substrate, surface-treated films may be used. The method for surface treatment includes hydrophilic treatment generally used, for example, a method of stacking an acrylic resin or a sulfonic acid base-containing resin by coating or laminating, a method of increasing the hydrophilicity of film surface by plasma treatment, corona discharge treatment and the like.

The method to coat a substrate with a resin solution includes use of a die, coater or brush, spraying, roll-coating, spin-coating, dip-coating, gravure-coating, and others. Coating of the resin solution may be repeated in order to obtain an optical film with a desired thickness.

There is no particular limitation on the method to evaporate solvent from the resin solution applied to a substrate. There may be used common methods, for example, a method of passing the coated substrate through a dry kiln with many rollers. If air bubbles are generated on evaporation of the solvent, properties of the optical film obtained might be drastically deteriorated. Therefore, in order to prevent formation of air bubbles, preferably, solvent is evaporated in a plurality of steps and the temperature and airflow volume are controlled in each step.

The residual solvent content in resin film is generally 20% by weight or less, preferably 5% by weight or less, more preferably 1% by weight or less, and particularly preferably 0.5% by weight or less. When the residual solvent content exceeds the above range, the resin film may show larger dimensional change with time in practical use thereof, and the residual solvent might lower the glass transition temperature, lowering the heat resistance.

Further, the residual solvent content in resin film might be required to properly adjust within the above range in order to optimize a stretching step described below. Specifically, the residual solvent content may be adjusted to generally 20 to 0.1% by weight, preferably 5 to 0.1% by weight, and more preferably 1 to 0.1% by weight so that a constant and uniform retardation can be generated in the stretching step. When the solvent content is controlled within such range, the stretching is facilitated, and the retardation can be easily controlled.

The thickness of resin film thus obtained is, for resin film (a'), generally 5 to 1,000 μm, preferably 15 to 500 μm, more preferably 25 to 300 μm, and particularly preferably 40 to 150 μm; whereas, for resin film (b'), generally 0.1 to 250 μm, preferably 0.5 to 200 μm, more preferably 1 to 100 μm, and particularly preferably 1 to 50 μm. When the thickness is less than the above range, the resin film is practically difficult to handle. On the other hand, when the thickness exceeds the above range, winding the resin film in a form of roll becomes difficult.

The thickness distribution of resin film is generally within ±20%, preferably within ±10%, more preferably within ±5%, and particularly preferably within ±3% with respect to the mean. The percentage variation in thickness per cm is generally 10% or less, preferably 5% or less, more preferably 1% or less, and particularly preferably 0.5% or less. By forming a resin film so as to satisfy such requirements for the thickness, when the resin film is stretched, generation of unevenness in the retardation of transmitted light can be prevented.

The resin film (a'), resin film (b'), and the laminated film containing the layers of resin film (a') and resin film (b'), which are obtained as described above, are stretched so as to attain the above-described optical properties. As the stretching method, there may be used a method in which heat-shrinkable film is adhered, using an adhesive, to one or both sides of the resin film with its shrinking direction aligned perpendicular to the stretching direction, followed by stretching of the resultant assembly by a publicly known method, that is, free-end uniaxial stretching, strip-biaxial stretching or biaxial stretching; a method in which, after the above stretching, heat-shrinkable film is adhered to one or both sides of the resin film, and the resin film is shrunk; and a method in which, after the above stretching, the resin film without heat-shrinkable film is shrunk with controlling the direction and rate of shrinkage.

As the heat-shrinkable film, there may be used uniaxially or biaxially stretched film made of resin such as polyester, polystyrene, polyethylene, polypropylene, polyvinylchloride, polychlorovinylidene, polycarbonate and cyclic olefin resin. The shrinkage rate of such heat shrinkable film is 1 to 95%, preferably 5 to 70%, and more preferably 10 to 50% at the stretching temperature. Such range of shrinkage rate facilitates control of the refractive index of each component to a desired value.

In case of uniaxial stretching, the stretching speed is generally 1 to 5,000%/min, preferably 50 to 1,000%/min, and more preferably 100 to 1,000%/min.

In case of biaxial stretching, there may be used a method of simultaneously stretching in two directions or a method of uniaxially stretching followed by stretching in a direction different from said stretching direction. The intersection angle between two stretching axes herein is determined according to properties required for an intended optical film without particular limitation. The angle is generally in a range of 120 to 60 degrees. The stretching speeds in each direction, which may be the same as or different from the other, is generally 1 to 5,000%/min, preferably 50 to 1,000%/min, more preferably 100 to 1,000%/min, and particularly preferably 100 to 500%/min.

The stretching temperature is, although not limited to, in a range of Tg±30°C, preferably Tg ±15°C, and more preferably Tg-5°C to Tg+15°C based on the glass transition temperature of resin, Tg. Setting the stretching temperature within the above range is preferred because generation of unevenness in retardation can be suppressed in the resultant stretched film, and the refractive index of each component can be readily controlled.

The stretch ratio is determined according to the properties required for an intended optical film without particular limitation. It is generally 1.01 to 10 times, preferably 1. 03 to 5 times, and more preferably 1.03 to 3 times. When the stretch ratio exceeds the above range, the retardation in resultant stretched film might be hard to control. The stretched film may be cooled as it is, but preferably cooled after keeping at a temperature between Tg-20°C and Tg of the resin film for at least 10 seconds or longer, preferably 30 seconds to 60 minutes, and more preferably 1 to 60 minutes. This treatment can give a stable retardation film wherein the retardation of transmitted light is little varied with time.

In the film stretched as described above, molecules are oriented through stretching, resulting in the function of giving retardation to transmitted light. The retardation can be controlled by the stretch ratio, stretching temperature, film thickness, and others.

In the above stretching, the Nz-coefficient of film (a), which is formed by stretching resin film (a'), and the Nz-coefficient of film (b), which is formed by stretching resin film (b'), can fall in a range of 0.1 to 0.9, preferably 0.3 to 0.7, and more preferably 0.5 to 0.6. Accordingly, one can also adjust the Nz-coefficient to be in the above range for teh optical film of the present invention, which is composed of films (a) and (b) with such optical properties, as described above.

<Usage of optical film>

The optical film of the present invention has the above optical properties and excellent viewing angle compensation effects, and hence it is suitable as a viewing angle compensation film used in liquid crystal displays, particularly VA-type large liquid crystal TV. Besides such applications, it can be used, for example, as various liquid crystal display elements in cellular phones, digital information terminals, beepers, navigation systems, in-vehicle liquid crystal displays, liquid crystal monitors, light control panels, displays for OA equipments or displays for AV equipments; as electroluminescence display elements; in touch-sensitive panels or the like. It can be also useful as a wavelength plate used in recording or playback equipments for optical discs such as CD, CD-R, MD, MO and DVD.

[Polarizer]

The polarizer of the present invention is a product in which the optical film of the present invention is laminated on one or both sides of a polarizer (polarization film). For lamination, the optical film may be directly glued to the polarizer using a proper adhesive or tackifier, or the optical film may be glued to the polarizer with a protective film laminated thereon. Considering the cost and others, it is preferred to laminate the optical film of the present invention directly to the polarizer.

As the polarizer (polarization film), there may be used, although not limited to, for example, a stretched film obtained by a method in which a polarizing component, such as iodine and dichroic dyes, is incorporated in a film made of a polyvinyl alcohol-based resin, such as polyvinyl alcohol (PVA), polyvinyl formal and polyvinyl acetal, followed by stretching.

As the protective film, there may be used, although not limited to, transparent, mechanically strong, thermally stable polymer films such as cellulose films (for example, triacetyl cellulose (TAC)), polyester films, polycarbonate films, polyethersulfone films, polyamide films, polyimide films and polyolefin films.

There are no particular limitations on the adhesive or pressure-sensitive adhesive used in lamination of the protective film on the polarizer. There may be used, for example, adhesives or pressure-sensitive adhesives made of acrylic polymers or vinyl alcohol polymers. In particular, when a PVA film is used as the polarizer, PVA adhesives are preferably used from a viewpoint of adhesion.

There are no particular limitations on the adhesive or pressure-sensitive adhesive used in direct lamination of the optical film to the polarizer. There may be used, for example, aqueous pressure-sensitive adhesives comprising an aqueous dispersion of an acrylate polymer and others. Use of such aqueous pressure-sensitive adhesives is preferred because it further improves the adhesion to resin film (a), resulting in stable durability. When the optical film is laminated on the polarizer with a protective film laminated thereon, adhesives or tackifiers as described above may be used as appropriate without particular limitation.

The polarizer of the present invention has excellent viewing angle compensation effects. Therefore, when said polarizer is provided on the front (viewer's side) of a liquid crystal cell in a liquid crystal display, color dropout (coloration) can be prevented, and also a high contrast ratio is achieved. The polarizer of the present invention is also used in wide range of applications, because the changes in properties are small even after prolonged use at high temperatures.

Examples

Hereinafter, the present invention is further specifically described with Examples, but the present invention is not limited to the examples below so far as it does not surpass its gist. In the following, "parts" and "%" represent "parts by weight" and "% by weight", respectively, unless otherwise noted.

Measurement methods for the properties in the present invention are given below.

(1) Glass transition temperature (Tg)
The glass transition temperature was measured with a differential scanning calorimeter (DSC) manufactured by Seiko Instruments Inc. at a heating rate of 20°C/min under nitrogen atmosphere.
(2) Saturated water absorption ratio
The saturated water absorption ratio was determined by measuring a weight change of a specimen before and after immersion in water at 23°C for one week according to ASTM D570.
(3) Total light transmittance and haze
The total light transmittance and haze were measured with a haze meter (model HGM-2DP) manufactured by Suga Test Instruments Co., Ltd.
(4) Retardation of transmitted light
The retardations of transmitted light were measured at wavelengths of 480, 550, 590, 630 and 750 nm with "KOBRA-21ADH" manufactured by Oji Scientific Instruments, and the values in region other than these wavelengths were calculated with Cauchy's dispersion equation using the retardation values at these wavelengths.
(5) Measurement of luminescent spot
A specimen was sandwiched between polarizers under cross-Nicol state and placed on a light source of 1000 $cd/m^2$ to observe partial light leakage with the naked eye and determine a number of observable luminescent spots of 10 μm or larger.
(6) Measurement of brightness, viewing angle and contrast ratio
The brightness, viewing angle, and contrast ratio of liquid crystal panel were measured with a luminance meter "LS-110" manufactured by Minolta Co., Ltd. in a dark room.
(7) Residual solvent content
A specimen was dissolved in a good solvent other than the solvents used, and the resultant solution was analyzed by gas chromatography ("GC-7A" manufactured by Shimadzu Corporation).
(8) Logarithmic viscosity
The logarithmic viscosity was measured with an Ubbelohde type viscometer using a solution in chloroform or N-methyl-2-pyrrolidone (sample concentration: 0.5 g/dL) at 30°C.

<Synthesis example 1> Synthesis of cyclic olefin resin (resin A1)

A nitrogen-purged reaction vessel was charged with 250 parts of 8-methyl-8-methoxycarbonyltetracyclo $[4.4.0.1^{2,5}.1^{7,10}]$-3-dode cene (specific monomer), 18 parts of 1-hexene (molecular weight regulator) and 750 parts of toluene (solvent for ring-opening polymerization), and the resultant solution was heated to 60°C. To this solution, there were added, as polymerization catalysts, 0.62 parts of toluene solution containing triethylaluminum (1.5 mol/L) and 3.7 parts of toluene solution containing tungsten hexachloride modified with t-butanol and methanol (t-butanol:methanol: tungsten = 0.35 mol:0.3 mol:1 mol) (concentration 0.05 mol/L). This reaction system was heated at 80°C for 3 hours with stirring to obtain a solution of the ring-opened polymer through ring-opening polymerization. The polymerization conversion in this polymerization was 97% and the logarithmic viscosity of the ring-opened polymer obtained was 0.75 dL/g as measured in chloroform at 30°C.

Four thousand parts of the solution of ring-opened polymer thus obtained were charged into an autoclave, here were added 0. 48 parts of $RuHCl(CO)[P(C_6H_5)_3]_3$, and hydrogenation was performed under a hydrogen pressure of 100 $kg/cm^2$ at a reaction temperature of 165°C for 3 hours with stirring.

The reaction solution obtained (solution of the hydrogenated polymer) was cooled and then hydrogen gas pressure was released. This reaction solution was poured into a large volume of methanol to form a coagulated product, which was separated to collect and then dried, thereby yielding a hydrogenated polymer (referred to as "resin A1" hereinafter).

For resin A1 obtained, the hydrogenation ratio was 99.9% as determined by $^1H$-NMR, the glass transition temperature (Tg) was 165°C as measured with DSC, the number-average molecular weight (Mn) was 32,000, the weight-average molecular weight (Mw) was 137,000 and the molecular weight distribution (Mw/Mn) was 4.29 in terms of polystyrene as measured with GPC (solvent: tetrahydrofuran), the saturated water absorption ratio was 0.3% at 23°C, the SP value was 19 $MPa^{1/2}$, and the logarithmic viscosity was 0.78 dL/g in chloroform at 30°C, the gel content was 0.4%.

<Synthesis example 2> Synthesis of cyclic olefin resin (resin A2)

A hydrogenated polymer (referred to as "resin A2" hereinafter) was obtained similarly to Synthesis example 1 except using 215 parts of 8-methyl-8-methoxycarbonyltetracyclo[4.4.0.$1^{2,5}$.$1^{7,10}$]-3-dode cene and 35 parts of bicyclo [2.2.1]hept-2-ene as specific monomers and changing the amount of 1-hexene (molecular weight regulator) to 18 parts.

For resin A2 obtained,
the hydrogenation ratio was 99.9%,
the glass transition temperature (Tg) was 125°C as measured with DSC,
Mn was 46, 000, Mw was 190, 000 and molecular weight distribution (Mw/Mn) was 4.15 in terms of polystyrene as measured with GPC
(solvent: tetrahydrofuran),
the saturated water absorption ratio was 0.18% at 23°C,
the SP value was 19 $MPa^{1/2}$,
the logarithmic viscosity was 0. 69 dL/g in chloroform at 30°C, and the gel content was 0.2%.

<Synthesis example 3> Synthesis of negative birefringent polymer (resin B)

In 1000 g of N-methyl-2-pyrroridone, 19.5741 g of 2,3,5-tricarboxycyclopentylacetic acid dianhydride and 30.4259 g of 9,9-bis(4-aminophenyl)fluorene were dissolved, and the reaction was performed at ambient temperature for 6 hours. The resultant reaction solution was poured into a large excess of methanol to precipitate a polyamic acid, which was then washed with methanol and dried under reduced pressure at 40°C for 15 hours to yield 60.2 g of a polymer, which had a logarithmic viscosity of 1.44 dL/g as measured in N-methyl-2-pyrrolidone. In 570 g of γ-butyrolactone, 30.0 g of this polymer was dissolved, 21.6 g of pyridine and 16.74 g of acetic anhydride were added here, and imidation was performed at 120°C for 3 hours. The reaction solution obtained was poured into a large excess of methanol to precipitate a polymer, yielding a polymer (referred to as "resin B" hereinafter), which had a logarithmic viscosity of 1.35 dL/g.

Resin B was formed into a film by the method described later, and the film, which contained 20wt% of residual solvent, was uniaxially stretched at 200°C with a stretching ratio of 1.1-fold. The refractive index in the stretching direction of resultant film was lower than the refractive index in the direction perpendicular thereto, thus confirming that resin B was a negative birefringent polymer.

<Manufacture example 1> Resin film (a1-1)

Resin A1 was dissolved in toluene in a concentration of 30% (solution viscosity at ambient temperature being 30,000 mPa·s), and here was added pentaerythritol tetrakis[3-(3,5-di-tert-butyl-4-hydroxyphenyl)propionate] as an antioxidant in an amount of 0.1 parts by weight with respect to 100 parts by weight of the polymer. The resultant solution was filtered through a metal fiber sintered filter with pore diameter of 5 μm from Nihon Pall, Ltd. at a flow rate controlled so that the differential pressure was kept 0.4 MPa or less. The solution obtained was applied, to a PET film with thickness of 100 μm ("Lumilar-U94" from Toray Industries, Inc.) with hydrophilic surface treatment (treatment for facilitating bonding) with an acrylic acid-type agent, using an "INVEX Lab Coater" manufactured by Inoue Metalworking Industry Co., Ltd. installed in a Class 1000 clean room so as to form a film with thickness of 200 μm after drying. After primary drying at 50°C, the coated film was secondarily dried at 90°C. The PET film was peeled to yield a resin film, which was referred to as (a1-1). In the film obtained, the residual solvent content was 0.5%, and the total light transmittance was 93%.

<Manufacture example 2> Resin film (a2-1)

Resin film (a2-1) with thickness of 150 μm was obtained similarly to Manufacture example 1 except using resin A2 instead of resin A1. In the film obtained, the residual solvent content was 0.5%, and the total light transmittance was 93%.

<Manufacture example 3> Resin film (b-1)

Resin film (b-1) with thickness of 15 μm was obtained similarly to Manufacture example 1 except using resin B instead of resin A1, using γ-butyrolactone instead of toluene, and changing the concentration to 10%. In the film obtained, the residual solvent content was 20%, and the total light transmittance was 91%.

<Manufacture example 4> Resin film (c-1)

Laminated-type optical film (c-1), in which resin film (a1-1) and resin film (b-1) were apparently unified, was obtained similarly to Manufacture example 3 except using resin film (a1-1) instead of a PET film as substrate and not releasing the film from the substrate. In the film obtained, the residual solvent contents are 0.2% in the substrate, resin A1, and 20% in the coating layer, resin B. The total light transmittance of this laminated-type film was 92%.

[Manufacture example 5] Resin film (c-2)

A composition (solid content: 3% by weight) was prepared by diluting "Hydran WLS-201" (from Dainippon Ink and Chemicals Incorporated), which was a polyether polyurethane material, with methanol. This composition was applied onto resin film (a1-1) using a wire bar with 12 μm gap and dried by heating at 80°C for 5 minutes to prepare resin film (a1-4) having polyurethane layer. Resin film (b-1) was laminated on the polyurethane layer-coated surface of the resin film (a1-4) similarly to Manufacture example 3 except using the resin film (a1-4) instead of PET film as a substrate and not releasing the film from the substrate. Laminated-type resin film (c-2), in which resin film (a1-4) and resin film (b-1) were apparently unified, was thus obtained. The residual solvent contents of the film obtained were 0.2% in the substrate, resin A1, and 20% in the coating layer, resin B. The total light transmittance of this laminated-type film was 92%.

[Example 1]

To the surface of resin film (a1-1) was adhered polyester film with a shrinkage ratio of 30% at the stretching temperature, 180°C (Tg+10°C), using a pressure-sensitive adhesive, so that the shrinking axis of the polyester film was aligned perpendicular to the stretching direction. The resultant film was stretched by two-fold at a stretching speed of 300%/min. Subsequently, after the film was held as was in an atmosphere at 150°C (Tg-20°C) for 1 minute and then cooled to room temperature, the film was taken out of the chamber. The polyester film was removed to obtain retardation film (a1-2).

Next, the polyester film was adhered to the surface of resin film (b-1) similarly to the above procedure, and the resultant film was stretched by two-fold at a stretching temperature of 180°C at a stretching speed of 300%/min. Subsequently after the film was held as was in an atmosphere at 150°C for 1 minute and then cooled to room temperature, the film was taken out of the chamber. The polyester film was removed from the sample film, and the sample film was dried in a vacuum desiccator at 100°C so that the residual solvent content decreased to 0. 5% or less, thereby yielding retardation film (b-2).

Retardation films (a1-2) and (b-2) thus obtained were laminated with the stretching directions aligned parallel to each other using an acrylic UV adhesive while adjusting the thickness of adhesive layer to be 5 μm or less, thereby yielding optical film (1) for liquid crystal displays. The optical and other properties of retardation films (a1-2) and (b-2) and optical film (1) are shown in Table 1.

[Example 2]

To the surface of resin film (a2-1) was adhered polyester film with a shrinkage ratio of 30% at the stretching temperature, 135°C (Tg+10°C), using a pressure-sensitive adhesive, so that the shrinking axis of the polyester film was aligned perpendicular to the stretching direction. The resultant film was stretched by 2.0-fold at a stretching speed of 300%/min. Subsequently, after the film was held as was in an atmosphere at 105°C (Tg-20°C) for 1 minute and then cooled to room temperature, the film was taken out of the chamber. The polyester film was removed to obtain retardation film (a2-2).

Retardation film (a2-2) and retardation film (b-2) obtained in Example 1 were laminated with the stretching directions aligned parallel to each other using an acrylic UV adhesive while adjusting the thickness of the adhesive layer to be 5 μm or less, thereby yielding optical film (2) for liquid crystal displays. The optical and other properties of retardation films (a2-2) and (b-2) and optical film (2) are shown in Table 1.

[Example 3]

To the surface of resin B-side of resin film (c-1) was adhered polyester film with a shrinkage ratio of 30% at the stretching temperature, 180°C, using a pressure-sensitive adhesive, so that the shrinking axis of the polyester film was aligned perpendicular to the stretching direction. The resultant film was stretched by 2.0-fold at a stretching speed of 300%/min. Subsequently, after the film was held as was in an atmosphere at 150°C for 1 minute and then cooled to room temperature, the film was taken out of the chamber. The polyester film was removed, and the sample film was dried in a vacuum desiccator at 100°C so that the residual solvent content of resin B layer decreased to 0.5% or less,

thereby yielding optical film (3) for liquid crystal displays.

Table 1 also lists the optical and other properties of retardations film (a1-3) and (b-3), which are components of optical film (3), and optical film (3). Here, said retardation film (a1-3) was formed by stretching resin film (a1-1) and said retardation film (b-3) was formed by stretching resin film (b-1).

[Example 4]

Optical film (4) for liquid crystal displays was obtained similarly to Example 3 except using resin film (c-2).

Table 1 also lists the optical and other properties of retardation films (a1-4) and (b-4), which are components of optical film (4), and optical film (4). Here, said retardation film (a1-4) was formed by stretching resin film (a1-1) followed by laminating a polyurethane layer thereon, and said retardation film (b-4) was formed by stretching resin film (b-1).

Table 1

| | | Cyclic olefin resin film | Negative birefringent polymer layer | Optical film for liquid crystal display |
|---|---|---|---|---|
| Example 1 | Film name | (a1-2) | (b-2) | (1) |
| | Thickness (μm) | 130 | 10 | 143 |
| | Nz-coefficient | 0.51 | 0.50 | 0.51 |
| | R450/R550 | 1.01 | 1.34 | 0.85 |
| | R650/R550 | 0.99 | 0.81 | 1.09 |
| | R550 (nm) | 396 | -132 | 267 |
| Example 2 | Film name | (a2-2) | (b-2) | (2) |
| | Thickness (μm) | 98 | 10 | 111 |
| | Nz-coefficient | 0.51 | 0.50 | 0.51 |
| | R450/R550 | 1.01 | 1.33 | 0.85 |
| | R650/R550 | 0.99 | 0.80 | 1.10 |
| | R550 (nm) | 394 | -131 | 266 |
| Example 3 | Film name | (a1-3) | (b-3) | (3) |
| | Thickness (μm) | 129 | 9 | 139 |
| | Nz-coefficient | 0.53 | 0.53 | 0.53 |
| | R450/R550 | 1.01 | 1.33 | 0.87 |
| | R650/R550 | 0.99 | 0.81 | 1.08 |
| | R550 (nm) | 390 | -129 | 260 |
| Example 4 | Film name | (a1-4) | (b-4) | (4) |
| | Thickness (μm) | 129 | 9 | 139 |
| | Nz-coefficient | 0.51 | 0.50 | 0.51 |
| | R450/R550 | 1.01 | 1.34 | 0.85 |
| | R650/R550 | 0.99 | 0.81 | 1.09 |
| | R550 (nm) | 396 | -132 | 267 |

<Example to prepare aqueous pressure-sensitive adhesive>

A reaction vessel was charged with 250 parts of distilled water, to which 90 parts of butyl acrylate, 8 parts of 2-hydyroxyethyl methacrylate, 2 parts of divinylbenzene and 0.1 parts of potassium oleate were added. The content of the vessel was stirred with a Teflon (trademark) agitator blade to disperse. After purged with nitrogen, the reaction system was heated to 50°C, and here were added 0.2 parts of potassium persulfate to initiate polymerization. After 2 hours, 0.1

parts of potassium persulfate was further added, and the mixture was heated to 80°C to continue polymerization for 1 hour to yield a polymer dispersion. This polymer dispersion was concentrated with an evaporator to a solid content of 70% to yield an aqueous pressure-sensitive adhesive (polar group-containing pressure-sensitive adhesive), which was a water-dispersed acrylate polymer.

For the acrylate polymer constituting aqueous pressure-sensitive adhesive thus obtained, the number-average molecular weight (Mn) was 69,000 and the weight-average molecular weight (Mw) was 135,000 in terms of polystyrene as measured with GPC (solvent: tetrahydrofuran), and the logarithmic viscosity was 1.2 dL/g as measured in chloroform at 30°C.

[Example 5]

A commercially available polyvinyl alcohol (PVA) was pre-stretched at a stretch ratio of 3 in a dying path, which was an aqueous solution containing 0.03% by weight of iodine and 0.5% by weight of potassium iodide at 30°C, and then post-stretched at a stretch ratio of 2 in a crosslinking bath, which was an aqueous solution containing 5% by weight of boric acid and 8% by weight of potassium iodide at 55°C. The resultant film was dried to yield a polarizer.

Then, optical film (1) in Example 1 was glued, with the above aqueous pressure-sensitive adhesive, to one side of the above polarizer so that the transmission axis of the polarizer was aligned parallel with the axis of stretching of optical film (1), while a commercially available triacetyl cellulose (TAC) film was glued to the other side of the polarizer with a PVA adhesive, yielding polarizer (1). For polarizer (1) obtained, the transmittance was 44.0%, and the degree of polarization was 99.9%.

In order to evaluate the properties of polarizer (1), a sample was prepared as follows. At first, from a liquid crystal panel of liquid crystal TV (LC-13B1-S) from Sharp Corporation, in which ASV-mode low-reflection black TFT liquid crystal was employed, a polarizer and a retardation film attached to the front viewed from viewer's side were peeled off. Polarizer (1) was then attached to this peeled portion so that it was aligned in the same direction as the transmission axis of the polarizer originally attached and the retardation film (optical film (1)) of polarizer (1) was positioned on the liquid crystal cell side.

The contrast ratio of this liquid crystal TV with polarizer (1) was as high as 60 at an azimuthal angle of 45 degrees and a polar angle of 60 degrees. Measurement of the viewing angle in all directions (region with a contrast ratio of 10 or higher) confirmed that the viewing angle was 170 degrees or higher in all of vertical, horizontal and oblique directions.

In a durability test, polarizer (1) was kept at 100°C for 2,000 hours, and the properties were similarly determined. The percentage change between before and after the durability test, [(before change - after change) x 100/before change], was 5% or less for any of the above properties.

[Example 6]

Heat resistance test was performed for optical films (3) and (4) at 80°C for 1000 hours. For the specimens of optical films (3) and (4) subjected to the heat resistance test, releasability was examined by hands, and incidences of material breakage and inter-film separation were visually inspected to evaluate adhesion between the films. In optical film (3), resin films (a1-3) and (b-3) were slightly separated at the ends of lamination between these films, while the material was broken in other portion. On the other hand, in optical film (4), no inter-film separation was observed between resin films (a1-4) and (b-4) and only material breakage took place.

[Comparative example 1]

Polarizer (2) was obtained similarly to Example 4 except using a commercially available TAC film instead of optical film (1). The transmittance and degree of polarization for polarizer (2) were 44.0% and 99.9%, respectively.

Polarizer (2) obtained was attached to a liquid crystal TV similarly to Example 4. The contrast ratio was as low as 3 when determined at an azimuthal angle of 45 degrees and a polar angle of 60 degrees. When the viewing angle (region with a contrast ratio of 10 or higher) was determined in all directions, it was 170 degrees or higher in vertical and horizontal directions but only 80 degrees in the oblique direction.

In a durability test, polarizer (2) was kept at 100°C for 2, 000 hours, and the degree of polarization was determined. The percentage change was 10%.

## Claims

1. An optical film comprising at least one film (a) layer made of a cyclic olefin resin exhibiting positive birefringence

and a film (b) layer, which has a thickness of 100 nm to 200, 000 nm, made of a polymer exhibiting negative birefringence on said film (a) layer, and satisfying formulae (1) to (4) below:

$$(1)\quad 0.1 \leq \text{Nz-coefficient} \leq 0.9,$$

$$(2)\quad 0.5 \leq R450/R550 \leq 0.9,$$

$$(3)\quad 1.0 \leq R650/R550 \leq 1.3,$$

$$(4)\quad 200\ \text{nm} \leq R550 \leq 350\ \text{nm};$$

wherein Nz-coefficient is given by Nz-coefficient = (nx - nz)/(nx - ny); R450, R550 and R650 represent the retardation, R, at wavelengths of 450 nm, 550 nm and 650 nm, respectively; R is given by R = (nx - ny) x d; nx represents the maximum value of refractive index in directions on the film plane; ny represents the refractive index in the direction perpendicular to the axis for nx in the film plane; nz is the refractive index in the direction of film thickness perpendicular to the axes for nx and ny; and d represents the film thickness in nm.

2. The optical film according to Claim 1, wherein the film (a) layer is a film layer formed by stretching resin film (a') made of the cyclic olefin resin exhibiting positive birefringence and the film (b) layer is a film layer formed by stretching resin film (b') made of the polymer exhibiting negative birefringence.

3. The optical film according to Claim 1, which is obtained by coating the resin film (a') made of the cyclic olefin resin exhibiting positive birefringence with the polymer exhibiting negative birefringence to form the resin film (b') layer, followed by stretching.

4. The optical film according to Claim 1, which is obtained by coating the resin film (a') made of the cyclic olefin resin exhibiting positive birefringence with the polymer exhibiting negative birefringence, followed by stretching and further coating with the polymer exhibiting negative birefringence.

5. The optical film according to Claim 1, wherein the film (a) has a thickness of 10,000 nm to 300,000 nm and satisfies formulae (5) and (6) below:

$$(5)\quad 1.0 \leq R_a450/R_a550 \leq 1.3,$$

$$(6)\quad 0.7 \leq R_a650/R_a550 \leq 1.0;$$

wherein $R_a450$, $R_a550$ and $R_a650$ represent the retardation of film (a), $R_a$, at wavelengths of 450 nm, 550 nm and 650 nm, respectively; $R_a$ is given by $R_a = (nx_a - ny_a) \times d_a$; $nx_a$ represents the maximum value of refractive index in directions on the film (a) plane; $ny_a$ represents the refractive index in the direction perpendicular to the axis for $nx_a$ in the film (a) plane; $nz_a$ is the refractive index in the direction of thickness of film (a) perpendicular to the axes for $nx_a$ and $ny_a$; and $d_a$ represents the thickness of film (a) in nm.

6. The optical film according to Claim 1, wherein the polymer exhibiting negative birefringence contains a fluorene skeleton.

7. The optical film according to Claim 6, wherein the fluorene skeleton-containing polymer exhibiting negative birefringence is a polyimide having a repeating unit represented by general formula (1) below:

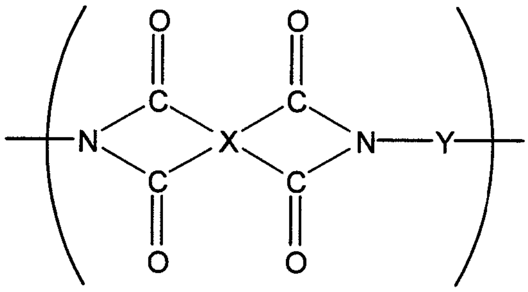

... (1)

wherein, in formula (1), X is a tetravalent organic group having an alicyclic structure and Y is a divalent organic group having a fluorene skeleton.

**8.** The optical film according to Claim 1, wherein the cyclic olefin resin is a norbornene resin having (a) constitutional unit(s) represented by general formulae (A) and/or (B) below:

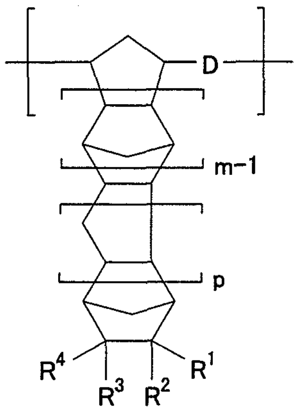

... (A)

wherein, in formula (A), m is an integer of 1 or more,
p is 0 or an integer of 1 or more,
D is independently a group represented by -CH=CH- or $-CH_2-CH_2-$, each of $R^1$ to $R^4$ independently represents a hydrogen atom; a halogen atom; a substituted or unsubstituted hydrocarbon group having 1 to 30 carbon atoms that may have a linkage containing an oxygen atom, a sulfur atom, a nitrogen atom or a silicon atom; or a polar group,
$R^1$ and $R^2$ and/or $R^3$ and $R^4$ may be unified into a divalent hydrocarbon group,
either $R^1$ or $R^2$ and either $R^3$ or $R^4$ may bond to each other to form a carbocyclic or heterocyclic ring, and said carbocyclic or heterocyclic ring may be monocyclic or polycyclic, and

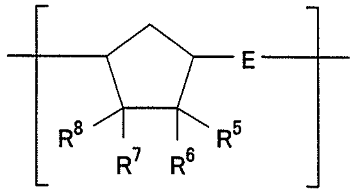

... (B)

wherein, in formula (B), E is independently a group represented by -CH=CH- or $-CH_2-CH_2-$,
each of $R^5$ to $R^8$ independently represents a hydrogen atom; a halogen atom; a substituted or unsubstituted hydrocarbon group having 1 to 30 carbon atoms that may have a linkage containing an oxygen atom, a sulfur atom, a

nitrogen atom or a silicon atom; or a polar group,
$R^5$ and $R^6$ and/or $R^7$ and $R^8$ may be unified into a divalent hydrocarbon group,
either $R^5$ or $R^6$ and either $R^7$ or $R^8$ may bond to each other to form a carbocyclic or heterocyclic ring, and said carbocyclic or heterocyclic ring may be monocyclic or polycyclic.

**9.** The optical film according to Claim 1, comprising at least one urethane primer layer between the film (a) layer and the film (b) layer.

**10.** A polarizer comprising the optical film described in Claims 1 to 9.

**11.** A liquid crystal display comprising the optical film described in Claims 1 to 9.

**12.** A liquid crystal display comprising the polarizer described in Claim 10.

**INTERNATIONAL SEARCH REPORT**

International application No.
PCT/JP2005/015000

A. CLASSIFICATION OF SUBJECT MATTER
*G02B5/30* (2006.01), *G02F1/1335* (2006.01), *G02F1/13363* (2006.01)

According to International Patent Classification (IPC) or to both national classification and IPC

B. FIELDS SEARCHED

Minimum documentation searched (classification system followed by classification symbols)
*G02B5/30* (2006.01), *G02F1/1335* (2006.01), *G02F1/13363* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 5-27119 A (Nitto Denko Corp.), 05 February, 1993 (05.02.93), Full text; all drawings (Family: none) | 1-6,8-12<br>7 |
| Y | JP 2001-350022 A (Tatsuo UCHIDA, Kabushiki Kaisha Tohoku Tekunobureinzu), 21 December, 2001 (21.12.01), Full text; all drawings (Family: none) | 1-6,8-12 |
| Y | YAMAMOTO et al., "LCD-yo Isosa Film", Nitto Technical Report, 1990 Nen 10 Gatsu, Vol.28, No.2, pages 105 to 113 | 1-6,8-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>17 October, 2005 (17.10.05) | Date of mailing of the international search report<br>25 October, 2005 (25.10.05) |
| Name and mailing address of the ISA/<br>Japanese Patent Office<br>Facsimile No. | Authorized officer<br>Telephone No. |

Form PCT/ISA/210 (second sheet) (April 2005)

**INTERNATIONAL SEARCH REPORT**

International application No.
PCT/JP2005/015000

C (Continuation). DOCUMENTS CONSIDERED TO BE RELEVANT

| Category* | Citation of document, with indication, where appropriate, of the relevant passages | Relevant to claim No. |
|---|---|---|
| Y | "Kogakuyo Tomei Jushi, Tainetsusei Jushi 'ARTON' no Sekkei", Kaihatsu to Oyo, 2001 Nen 12 Gatsu, pages 78 to 85 | 1-6,8-12 |
| Y<br>A | WO 2000/026705 A1 (Teijin Ltd.), 11 May, 2000 (11.05.00), Full text; all drawings & US 6565974 B1 & EP 1045261 A1 & EP 1457792 A1 | 6<br>7 |
| Y | JP 2003-315555 A (Nitto Denko Corp.), 06 November, 2003 (06.11.03), Full text; all drawings & WO 2003/071319 A1 & US 2005/0099562 A | 3,4 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H52108 A
- JP H7287122 A
- JP H7287123 A
- JP 2003014901 A